# FASCICULE DE BREVET EUROPEEN

(11) **EP 2 807 046 B1**
(45) Date de publication et mention de la délivrance du brevet: **19.02.2025**
(21) Numéro de dépôt: 13704182.8
(22) Date de dépôt: 21.01.2013
(51) Int. Cl.: B60J 1/00, B32B 17/06, B60Q 3/208, B60Q 3/64, F21V 8/00

(54) **VITRAGE ECLAIRANT POUR VEHICULE**
BELEUCHTUNGSVERGLASUNGSEINHEIT FÜR EIN FAHRZEUG
ILLUMINATING GLAZING UNIT FOR A VEHICLE

(30) Priorité: 26.01.2012 FR 1250740
(43) Date de publication de la demande: 03.12.2014
(60) Demande divisionnaire: 24183904.2
(73) Titulaire: SAINT-GOBAIN GLASS FRANCE, 92400 Courbevoie (FR)
(72) Inventeur: VERRAT-DEBAILLEUL, Adèle, F-60150 Villers-sur-Coudun (FR)
(74) Mandataire: Saint-Gobain Recherche
(86) Numéro de dépôt international: PCT/FR2013/050124
(87) Numéro de publication internationale: WO 2013/110885

(56) Documents cités:
- WO-A1-2004/106056
- WO-A1-2008/139353
- DE-A1- 10 320 614
- DE-B3- 102004 039 883
- FR-A1- 2 955 530
- JP-A- H1 082 915
- US-A1- 2008 117 355

## Description

La présente invention concerne un vitrage éclairant pour véhicules, comprenant des diodes électroluminescentes logées au sein d'un trou percé dans au moins une feuille du vitrage. Elle concerne également un véhicule comportant un tel vitrage.

Il est connu d'incorporer des modules de diodes électroluminescentes (module LED) au niveau du bord de vitrages simples ou feuilletés, de façon à ce que la lumière émise par les LED entre par la tranche d'une feuille de verre et soit guidée par celle-ci jusqu'à un élément diffusant, appelé également moyen d'extraction de la lumière.

Ces vitrages éclairants ont essentiellement une fonction d'éclairage d'ambiance ou de signalisation lumineuse qui est obtenue avec des LED de faible puissance. Le rendement lumineux de tels vitrages éclairés par la tranche est généralement limité en raison des pertes de lumière dues à l'absorption de la lumière par le verre servant de guide d'onde et/ou les matériaux à proximité de celui-ci.

L'approche consistant à essayer de surmonter ce problème en utilisant des LED plus puissantes pose toutefois un problème de surchauffe. En effet, l'évacuation de la chaleur générée par des modules LED en cours de fonctionnement dans un environnement confiné s'avère très souvent difficile. Dans le domaine des véhicules automobiles ou autres, il est souvent nécessaire de protéger les modules LED contre l'action de l'humidité omniprésente. Cette protection se fait couramment soit par encapsulation, c'est-à-dire surmoulage des modules LED avec un polymère organique injecté sous forme liquide puis durci, soit en logeant les modules LED, de façon démontable ou non, dans des boîtiers plus ou moins étanches. Or, la surchauffe prolongée des LED se traduit presque inévitablement par une diminution indésirable de leur durée de vie.

Il est connu du document DE 10 2004 039883 B3 un élément en verre, comportant au moins une première vitre transparente, une seconde vitre, de préférence transparente, et une LED. Il est, en outre, connu du document US 2008/117355 A1 un dispositif de source de lumière de surface comprenant un guidage de lumière et des sources de lumière ponctuelles horizontales et un dispositif d'affichage à cristaux liquides comprenant le dispositif de source de lumière de surface.

La présente invention est basée sur une approche très différente de celle décrite ci-dessus. Plutôt que d'essayer d'utiliser des LED toujours plus puissantes, l'idée a été d'améliorer le rendement lumineux global du vitrage en raccourcissant le chemin optique parcouru par la lumière entre la LED et le moyen d'extraction qui extrait la lumière du guide d'onde (feuille de verre) et la diffuse vers l'intérieur et/ou l'extérieur du véhicule.

Plutôt que de rapprocher le moyen d'extraction de la lumière de la tranche périphérique de la feuille, l'idée a été de créer une tranche additionnelle à proximité du moyen d'extraction par perçage d'un trou traversant dans la feuille de verre éclairée. Ce trou doit être suffisamment grand pour recevoir une ou plusieurs LED qui injectent, par la tranche additionnelle, de la lumière qui est aussitôt extraite par le moyen d'extraction à proximité immédiate du trou.

Cette solution technique permet de réduire à quelques centimètres seulement le chemin optique parcouru par la lumière avant extraction. Le rendement lumineux et la puissance d'éclairage d'un tel vitrage sont indépendants de la distance entre le moyen d'extraction et le bord du vitrage. La création d'une ou plusieurs tranches additionnelles permet d'agrandir considérablement la surface d'injection et de multiplier le nombre de sources lumineuses, qu'elles soient de faible ou haute puissance.

La présente invention a par conséquent pour objet un vitrage éclairant pour véhicule, tel que défini dans la revendication 1.

Bien entendu, la présente invention englobe également les vitrages éclairants qui comportent plusieurs trous traversants contenant des LED. Ces trous peuvent avoir des formes géométriques diverses qui sont principalement limitées par la faisabilité technique du procédé de perçage et par la solidité des feuilles de verre percées. Au moment où l'invention a été faite, les formes circulaires ou rectangulaires, de préférence à angles arrondis, donnaient les meilleurs résultats en termes de solidité de la feuille et de facilité de perçage. Toutefois, d'autres formes de trous, plus complexes, qui deviendraient techniquement plus faciles à réaliser dans les années à venir sont bien entendu également englobées.

Le ou les trous traversants sont suffisamment grands pour loger plusieurs LED ou plusieurs modules de LED. Ils ne doivent toutefois pas dépasser une certaine taille au-delà de laquelle la solidité du vitrage risque d'être significativement réduite. L'étendue de chaque trou traversant ne dépasse de préférence pas 100 cm², et est avantageusement comprise entre 10 et 50 cm².

Le vitrage selon l'invention est un vitrage feuilleté, c'est-à-dire il comprend, en plus de la première feuille, une deuxième feuille transparente en verre minéral avec une première face principale, une deuxième face principale et une tranche périphérique, et un intercalaire de feuilletage, également transparent, qui est en contact adhésif avec les deux feuilles de verre, et plus précisément avec la deuxième face principale de la première feuille et la première face principale de la deuxième feuille.

Dans la présente demande le terme « première feuille » désigne toujours la feuille percée et éclairée par la tranche interne du trou. La deuxième feuille est généralement non éclairée. Le vitrage de l'invention est de préférence monté sur le véhicule de façon à ce que la première feuille soit celle en contact avec l'habitacle du véhicule et la deuxième feuille celle située plus vers l'extérieur du véhicule, souvent en contact direct avec l'atmosphère extérieur du véhicule.

Le terme « première surface principale » désigne, aussi bien en relation avec la première qu'avec la deuxième feuille la face de la feuille tournée vers l'intérieur du véhicule. Logiquement, le terme « deuxième surface principale » désigne alors la surface de chaque feuille dirigée ou destinée à être dirigée vers l'extérieur du véhicule.

On utilisera de préférence pour la première feuille un verre minéral sodo-calcique incolore tel que le verre Planilux^{®} commercialisé par la Demanderesse. La première feuille a typiquement une épaisseur comprise entre 2,5 et 6 mm lorsqu'il s'agit d'un vitrage simple, et une épaisseur comprise entre 1,4 et 3,2 mm, de préférence entre 1,4 et 2,1 mm lorsqu'il s'agit d'un vitrage feuilleté.

La deuxième feuille peut bien entendu être aussi transparente et incolore que la première feuille. Dans un mode de réalisation, un vitrage feuilleté selon l'invention sera constitué de deux feuilles Planilux^{®} incolores.

Contrairement à la première feuille, la deuxième feuille est avantageusement en verre teinté, par exemple en verre Vénus^{®}, TSA3+ ou TSA4+ également commercialisés par la Demanderesse. La deuxième feuille a typiquement une épaisseur comprise entre 1,4 et 2,1 mm.

La deuxième feuille peut avoir une taille plus importante que la première, dépassant ainsi cette dernière sur au moins une partie de son pourtour. Cette variante pourrait être intéressante lorsque la première feuille est éclairée non seulement par le trou traversant mais également par sa tranche périphérique. Le système d'éclairage supplémentaire, par la tranche périphérique, comportant les modules LED peut alors s'appuyer sur la première face de la deuxième feuille, là où celle-ci dépasse la première feuille.

L'intercalaire de feuilletage utilisé dans les vitrages feuilletés peut être en n'importe quel matériau polymère transparent couramment utilisé à cette fin, par exemple en poly(vinyle butyral) (PVB), en polyuréthanne thermoplastique (TPU) ou en copolymère d'éthylène et d'acétate de vinyle (EVA). Il a typiquement une épaisseur comprise entre 0,2 et 1,1 mm et peut être incolore ou teinté.

Dans le cas d'un vitrage feuilleté non couvert par les revendications, le trou traversant peut être limité à la première feuille. Dans le cas du vitrage feuilleté selon l'invention, le trou traversant s'étend à travers l'intercalaire de feuilletage et la deuxième feuille transparente. Dans ce cas, le perçage est réalisé de préférence sur le vitrage après feuilletage.

Dans le cas où le trou s'étend à travers toute l'épaisseur du vitrage, le trou traversant dans la deuxième feuille est rempli avantageusement avec un élément d'obstruction. Cet élément d'obstruction a pour fonction essentiellement de masquer les modules LED situés dans le trou et d'assurer l'étanchéité à l'eau liquide et de préférence également à la vapeur d'eau, de manière à protéger les modules LED et l'habitacle de l'humidité extérieure.

On pourra utiliser tout type de matériau approprié connu et couramment utilisé à cette fin, de préférence un matériau polymère opaque élastomère ou non, qui pourra éventuellement être fixé à la deuxième feuille au moyen d'un joint d'étanchéité. Il s'agit notamment d'un élément d'encapsulation formé par moulage par injection réaction (RIM, *reaction injection moulding*)

L'élément d'extraction de la lumière est situé à proximité immédiate du trou traversant. En effet, le rendement lumineux diminue fortement lorsque la distance entre la source lumineuse et le moyen de diffusion de la lumière augmente. La distance séparant la tranche interne du trou de l'élément d'extraction de la lumière est au plus égale à 20 cm, en particulier au plus égale à 10 cm, et idéalement au plus égale à 5 cm. Cette distance est celle entre la tranche interne et le point du moyen d'extraction le plus proche de cette tranche interne.

Comme déjà indiqué ci-avant, le moyen d'extraction de la lumière est situé sur une des faces principales de la feuille éclairée. Lorsqu'il s'agit de diffuser la lumière vers l'intérieur du véhicule, le moyen d'extraction est de préférence un revêtement diffusant opaque, de préférence de couleur blanche, situé au niveau de la deuxième face principale de la première feuille. Ce mode de réalisation est en effet plus avantageux qu'un revêtement semi-opaque situé sur la première face principale de la première feuille et qui ne diffuserait qu'une partie de la lumière vers l'intérieur du véhicule, une partie non négligeable étant diffusée en direction de l'extérieur du véhicule.

A l'inverse, lorsqu'on souhaite diffuser la lumière surtout vers l'extérieur du véhicule, par exemple dans le cas d'un feu de signalisation, le revêtement diffusant opaque est situé avantageusement sur la première face principale de la feuille éclairée, c'est-à-dire sur la face la plus interne de cette feuille.

L'élément d'extraction de la lumière peut se présenter sous forme d'une ou de plusieurs zones diffusantes, disposées autour du trou traversant. Il se présente de façon particulièrement avantageuse sous forme d'un motif à symétrie centrale, le centre de symétrie de ce motif étant de préférence superposé au centre de symétrie du trou traversant ou bien sous forme d'un motif à symétrie axiale, l'axe de symétrie étant de préférence superposé à un axe de symétrie du trou traversant.

Cette superposition des centres de symétrie n'est pas seulement très satisfaisante d'un point de vue esthétique, mais contribue également à une luminosité uniforme du moyen d'extraction de la lumière.

L'alimentation en électricité des LED situées dans le trou traversant peut se faire par une amenée de courant intégrée dans le vitrage feuilleté, par exemple un fil électrique incorporé dans l'intercalaire de feuilletage, ou bien ce fil électrique peut être appliqué sur la première face principale de la première feuille (côté habitacle), et éventuellement être protégé par un cache.

Le trou traversant dans la première feuille dans lequel sont logées les LED est avantageusement fermé par un couvercle, de préférence un couvercle amovible, fixé sur la tranche interne du trou traversant ou sur la première face principale de la première feuille par des moyens de fixation réversible.

Ce couvercle peut être un couvercle opaque qui a pour fonction essentielle de soustraire les modules de LED aux yeux des passagers du véhicule.

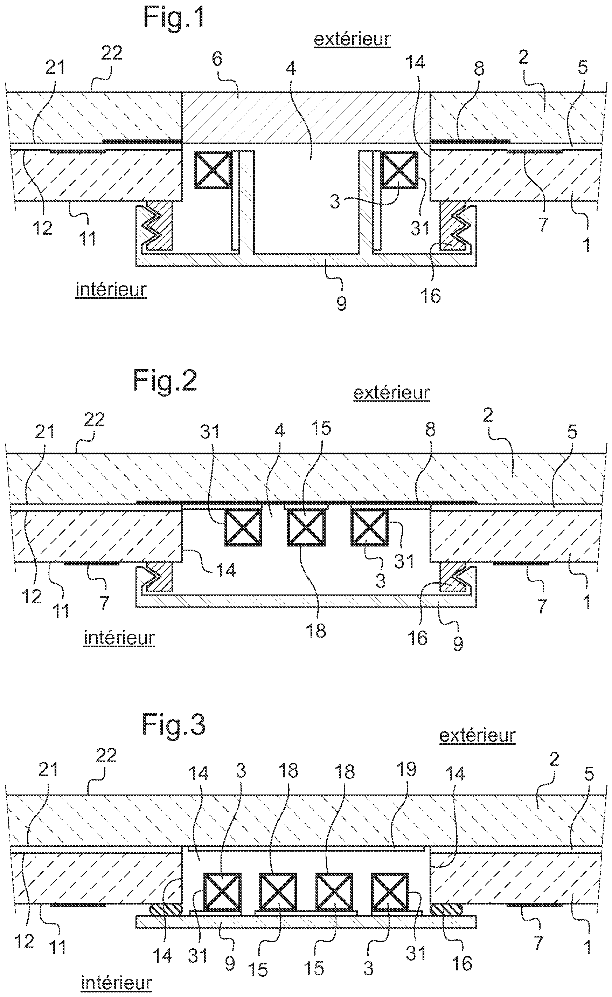

La Demanderesse a toutefois également envisagé un mode de réalisation, représenté à la figure 2, où le couvercle est translucide (diffusant) ou transparent et où le trou traversant contient non seulement des LED injectant leur lumière dans la tranche interne, mais également des LED dont la face émettrice n'est pas en regard de la tranche interne mais en regard du couvercle.

Ce mode de réalisation combinant un éclairage direct à travers le couvercle transparent ou translucide avec un éclairage indirecte via le moyen d'extraction de la lumière se distingue par un rendement lumineux particulièrement avantageux.

La Demanderesse a également envisagé un mode de réalisation, représenté à la figure 3, où des LED additionnelles envoient leur lumière non pas vers l'intérieur, mais vers l'extérieur du véhicule, à travers un émail translucide, c'est-à-dire diffusant et semi-transparent, appliqué sur une des faces principales de la deuxième feuille, de préférence la première face de la deuxième feuille.

Ce dernier mode de réalisation correspond par exemple à un feu de signalisation tel qu'un répétiteur de clignotant, intégré au niveau d'une vitre d'un véhicule.

La présente invention a également pour objet un véhicule comportant un vitrage éclairant tel que décrit ci-dessus. Comme déjà expliqué ci-avant, dans un tel véhicule la première face principale de la première feuille du vitrage est en contact avec l'intérieur du véhicule.

Le véhicule peut être un avion, bateau ou n'importe quel véhicule terrestre. On utilisera de préférence les vitrages de la présente invention dans des véhicules automobiles, en particulier en tant que partie du toit d'un véhicule automobile.

La présente invention sera à présent décrite plus en détail en référence aux dessins annexés dans lesquelles
- la figure 1 montre un premier mode de réalisation d'un vitrage éclairant selon l'invention.
- la figure 2 montre un deuxième mode de réalisation qui diffère de celui de la figure 1 par le fait qu'il comprend en outre des LED pour l'éclairage direct de l'habitacle, et
- la figure 3 montre un troisième mode de réalisation où des LED à éclairage direct diffusent leur lumière vers l'extérieur du véhicule.

Les modes de réalisation des figures 2 et 3 ne font pas partie de l'invention.

Le vitrage éclairant représenté à la figure 1 est un vitrage feuilleté comportant une première feuille 1 avec une première face principale 11 orientée vers l'intérieur du véhicule, une deuxième face principale 12 orientée vers l'extérieur du véhicule et une tranche périphérique (non représentée). Cette première feuille de verre est collée via un intermédiaire de feuilletage 5 à une deuxième feuille de verre 2 avec une première face principale 21 , une deuxième face principale 22 et une tranche périphérique (non représentée).

Un trou traversant 4 a été percé à travers la deuxième feuille 2, l'intercalaire de feuilletage 5 et la première feuille 1, créant dans cette dernière une tranche interne 14. Le trou traversant dans la deuxième feuille est obstrué par un élément d'obstruction 6 opaque affleurant au niveau de la deuxième surface 22 de la deuxième feuille.

Dans le trou traversant 4 de la première feuille sont logées des LED 3 avec leur face émettrice 31 en regard de la tranche interne 14. Les modules LED sont supportés par un couvercle opaque 9 amovible, fixé *via* des clips 16 à la première surface principale 11 de la première feuille. Le moyen d'extraction de la lumière 7 est située à proximité immédiate de la tranche interne 14. Il s'agit ici d'un émail opaque de couleur claire situé sur la seconde face principale 12 de la première feuille. Un émail opaque de masquage 8 sur la première face principale 21 de la deuxième feuille 2 est prévu pour empêcher l'émission directe de la lumière par les LED 3 vers l'extérieur du véhicule.

Bien que cela n'apparaisse pas sur cette figure, le trou traversant 4, le module de LED 3, le couvercle opaque 9 et le moyen d'extraction de la lumière 7 ont une symétrie centrale circulaire.

La figure 2 montre un mode de réalisation où la deuxième feuille 2 ne comporte pas de trou traversant. Un émail noir opaque 8 sur la première face principale 21 de la deuxième feuille 2 joue ici le rôle de masquage vers l'extérieur. Sur cet émail 8 est fixé un module LED comportant une pluralité de LED 3 disposées de manière à ce que leur faces émettrices 31 soient en regard de la tranche interne 14 du trou traversant 4 percé dans la première feuille 1. Ces LED à émission latérale envoient la lumière dans la première feuille 1 d'où elle est extraite par le moyen d'extraction 7 qui est ici un émail semi-transparent de couleur claire, situé sur la première face principale 11 de la première feuille. En plus des LED 3 à émission latérale pour l'éclairage indirect, un module de LED 15 à émission frontale est disposé au centre du trou, sa face émettrice 18 orientée vers l'intérieur du véhicule. La lumière émise par cette LED 15 est diffusée par le couvercle translucide diffusant 9 fixé réversiblement à la première face principale de la première feuille 11 au moyen de clips 16.

La figure 3 montre, comme la figure 2, un mode de réalisation combinant éclairage direct et indirect, ces deux types d'éclairage étant ici émis vers l'extérieur du véhicule. Le trou traversant 4 a été percé uniquement dans la première feuille et l'intercalaire de feuilletage 5, tandis que la deuxième feuille n'est pas percée. Le couvercle opaque 9 fixé à la première face principale 11 de la première feuille par un cordon de colle 16 porte un module LED circulaire avec des LED 3 à émission latérale, leur face émettrice 31 en regard de la tranche interne 14 du trou 4. La lumière injectée par ces LED 3 dans la première feuille 1 est aussitôt extraite et diffusé vers l'extérieur par un émail opaque 7 sur la première face principale 11 de la première feuille.

Des LED 15 à émission frontale sont disposées, avec leur face émettrice 18 dirigée vers la deuxième feuille 2, au centre du module LED 3. La lumière émise par ces LED 15 est diffusé par un émail diffusant semi opaque 19 sur la première face principale de la deuxième feuille, vers l'extérieur du véhicule.

## Revendications

1. Vitrage éclairant pour véhicule, comprenant
- une première feuille (1) transparente en verre minéral avec une première face principale (11), une deuxième face principale (12) et une tranche périphérique,
- une deuxième feuille (2) transparente en verre minéral avec une première face principale (21), une deuxième face principale (22) et une tranche périphérique (23),
- un intercalaire de feuilletage (5) transparent en contact adhésif avec la deuxième face principale (12) de la première feuille et la première face principale (21) de la deuxième feuille,
- une pluralité de diodes électroluminescentes (LED) (3) comportant chacune une face émettrice (31), et
- un élément d'extraction de la lumière (7), situé sur l'une des faces principales de la première feuille,
**caractérisé par le fait que** la première feuille est percée d'un trou traversant (4) délimité par une tranche interne (14), **par le fait que** plusieurs LED (3) sont logées dans le trou traversant (4), leur face émettrice (31) étant en regard de la tranche interne (14), **le fait que** le trou traversant (4) s'étend à travers l'intercalaire de feuilletage (5) et la deuxième feuille (2) transparente, et **par le fait que** l'élément d'extraction de la lumière (7) est situé à proximité immédiate du trou traversant, la distance séparant la tranche interne (14) de l'élément d'extraction de la lumière (7) étant au plus égale à 20 cm, de préférence au plus égale à 10 cm, en particulier au plus égale à 5 cm.

2. Vitrage éclairant selon la revendication 1, **caractérisé par le fait que** le trou traversant dans la deuxième feuille (2) est rempli avec un élément d'obstruction (6), de préférence un matériau polymère opaque.

3. Vitrage éclairant selon l'une quelconque des revendications précédentes, **caractérisé par le fait que** l'élément d'extraction de la lumière (7) est un revêtement diffusant opaque, de préférence de couleur blanche, situé au niveau de la deuxième face principale (12) de la première feuille (1).

4. Vitrage éclairant selon l'une quelconque des revendications précédentes, **caractérisé par le fait que** l'élément d'extraction de la lumière se présente sous forme d'une ou plusieurs zones disposées autour du trou traversant (4).

5. Vitrage éclairant selon la revendication 4, **caractérisé par le fait que** l'élément d'extraction de la lumière (7) se présente sous forme d'un motif à symétrie centrale, le centre de symétrie de ce motif étant de préférence superposé au centre de symétrie du trou traversant (4) ou sous forme d'un motif à symétrie axiale, l'axe de symétrie étant de préférence superposé à un axe de symétrie du trou traversant (4).

6. Vitrage éclairant selon l'une quelconque des revendications précédentes, **caractérisé par le fait que** le trou traversant (4) dans lequel sont logées les LED (3) est fermé par un couvercle (9).

7. Vitrage éclairant selon la revendication 6, **caractérisé par le fait que** le couvercle (9) est un couvercle opaque.

8. Vitrage éclairant selon la revendication 6, **caractérisé par le fait que** le couvercle (9) est en un matériau translucide ou transparent, et **par le fait que** le vitrage contient en outre des LED (15) dont la face émettrice (18) n'est pas en regard de la tranche interne (14) mais en regard du couvercle (9).

9. Vitrage éclairant selon la revendication précédente, **caractérisé par le fait que** le couvercle (9) est un couvercle amovible, fixé sur la première face principale (11) de la première feuille (1) par des moyens de fixation réversible (10).

10. Véhicule comportant un vitrage éclairant selon l'une quelconque des revendications précédentes, **caractérisé par le fait que** la première face principale (11) de la première feuille (1) du vitrage est en contact avec l'intérieur du véhicule.

11. Véhicule selon la revendication précédente, **caractérisé par le fait qu'**il s'agit d'un véhicule automobile.

12. Véhicule selon la revendication précédente, **caractérisé par le fait que** le vitrage éclairant est une partie du toit du véhicule.

## Patentansprüche

1. Leuchtverglasung für ein Fahrzeug, umfassend
- eine erste transparente Scheibe (1) aus Mineralglas mit einer ersten Hauptfläche (11), einer zweiten Hauptfläche (12) und einem Umfangsrand,
- eine zweite transparente Scheibe (2) aus Mineralglas mit einer ersten Hauptfläche (21), einer zweiten Hauptfläche (22) und einem Umfangsrand (23),
- eine transparente Verbundzwischenlage (5) in Haftkontakt mit der zweiten Hauptseite (12) der ersten Scheibe und der ersten Hauptseite (21) der zweiten Scheibe,
- eine Vielzahl von Leuchtdioden (LED) (3), die jeweils eine emittierende Fläche (31) aufweisen, und
- ein Lichtauskopplungselement (7), das sich auf einer der Hauptflächen der ersten Scheibe befindet,
**dadurch gekennzeichnet, dass** die erste Scheibe mit einem Durchgangsloch (4) durchbohrt ist, das durch einen Innenrand (14) begrenzt wird, **dadurch, dass** in dem Durchgangsloch (4) mehrere LED (3) untergebracht sind, deren emittierende Flächen (31) gegenüber dem Innenrand (14) sind, **dass** sich das Durchgangsloch (4) durch die Verbundzwischenlage (5) und die zweite transparente Scheibe (2) erstreckt, und **dadurch, dass** sich das Lichtauskopplungselement (7) in unmittelbarer Nähe des Durchgangslochs befindet, wobei der Abstand, der den Innenrand (14) von dem Lichtauskopplungselement (7) trennt, höchstens gleich 20 cm, vorzugsweise höchstens gleich 10 cm, insbesondere höchstens gleich 5 cm beträgt.

2. Leuchtverglasung nach Anspruch 1, **dadurch gekennzeichnet, dass** das Durchgangsloch in der zweiten Scheibe (2) mit einem Hinderniselement (6), vorzugsweise einem undurchsichtigen Polymermaterial, gefüllt ist.

3. Leuchtverglasung nach einem der vorstehenden Ansprüche,
**dadurch gekennzeichnet, dass** das Lichtauskopplungselement (7) eine undurchsichtige Streubeschichtung ist, vorzugsweise weiß, die sich auf der Höhe der zweiten Hauptfläche (12) der ersten Scheibe (1) befindet.

4. Leuchtverglasung nach einem der vorstehenden Ansprüche,
**dadurch gekennzeichnet, dass** das Lichtauskopplungselement in Form einer oder mehrerer Zonen vorliegt, die um das Durchgangsloch (4) herum angeordnet sind.

5. Leuchtverglasung nach Anspruch 4, **dadurch gekennzeichnet, dass** das Lichtauskopplungselement (7) in Form eines zentralsymmetrischen Musters vorliegt, wobei das Symmetriezentrum dieses Musters vorzugsweise dem Symmetriezentrum des Durchgangslochs (4) überlagert oder in Form eines axialsymmetrischen Musters ist, wobei die Symmetrieachse vorzugsweise einer Symmetrieachse des Durchgangslochs (4) überlagert ist.

6. Leuchtverglasung nach einem der vorstehenden Ansprüche,
**dadurch gekennzeichnet, dass** das Durchgangsloch (4), in dem die LEDs (3) untergebracht sind, durch eine Abdeckung (9) verschlossen ist.

7. Leuchtverglasung nach Anspruch 6, **dadurch gekennzeichnet, dass** die Abdeckung (9) eine undurchsichtige Abdeckung ist.

8. Leuchtverglasung nach Anspruch 6, **dadurch gekennzeichnet, dass** die Abdeckung (9) aus einem durchscheinenden oder transparenten Material besteht, und **dadurch, dass** die Verglasung ferner LEDs (15) enthält, deren emittierende Fläche (18) nicht gegenüber dem Innenrand (14), aber gegenüber der Abdeckung (9) ist.

9. Leuchtverglasung nach dem vorstehenden Anspruch,
**dadurch gekennzeichnet, dass** die Abdeckung (9) eine abnehmbare Abdeckung ist, die durch reversible Befestigungsmittel (10) an der ersten Hauptfläche (11) der ersten Scheibe (1) befestigt ist.

10. Fahrzeug, das eine Leuchtverglasung nach einem der vorstehenden Ansprüche aufweist, **dadurch gekennzeichnet, dass** die erste Hauptfläche (11) der ersten Scheibe (1) der Verglasung in Kontakt mit dem Innenraum des Fahrzeugs steht.

11. Fahrzeug nach dem vorstehenden Anspruch,
**dadurch gekennzeichnet, dass** es sich um ein Kraftfahrzeug handelt.

12. Fahrzeug nach dem vorstehenden Anspruch,
**dadurch gekennzeichnet, dass** die Leuchtverglasung ein Teil des Daches des Fahrzeugs ist.

## Claims

1. An illuminating glazing unit for vehicles, comprising
- a first transparent sheet (1) of mineral glass with a first main face (11), a second main face (12), and a peripheral edge,
- a second transparent sheet (2) of mineral glass with a first main face (21), a second main face (22),
- a transparent lamination interlayer (5) which is in adhesive contact with the second main face (12) of the first sheet and the first main face (21) of the second sheet,
- a plurality of light-emitting diodes (LEDs) (3), each having an emitting face (31), and
- a light extraction element (7), located on one of the main faces of the first sheet,
**characterized in that** the first sheet is pierced with a through hole (4) delimited by an internal edge (14), **in that** one or more LEDs (3) are housed in the through hole (4), with their emitting faces (31) turned toward the internal edge (14), **in that in that** the through hole (4) extends through the lamination interlayer (5) and the second transparent sheet (2) and **in that** the light extraction element (7) is located in the immediate proximity of the through hole, the distance separating the internal edge (14) from the light extraction element (7) is not more than 20 cm, or preferably not more than 10 cm, and particularly not more than 5 cm.

2. The illuminating glazing unit as claimed in claim 1, **characterized in that** the through hole in the second sheet (2) is filled with a blocking element (6), preferably an opaque polymer material.

3. The illuminating glazing unit as claimed in any one of the preceding claims, **characterized in that** the light extraction element (7) is an opaque diffusing coating, preferably white in color, located on the second main face (12) of the first sheet (1).

4. The illuminating glazing unit as claimed in any one of the preceding claims, **characterized in that** the light extraction element takes the form of one or more areas arranged around the through hole (4).

5. The illuminating glazing unit as claimed in claim 4, **characterized in that** the light extraction element (7) takes the form of a pattern with central symmetry, the center of symmetry of this pattern being preferably superimposed on the center of symmetry of the through hole (4), or the form of a pattern with axial symmetry, the axis of symmetry being preferably superimposed on an axis of symmetry of the through hole (4).

6. The illuminating glazing unit as claimed in any one of the preceding claims, **characterized in that** the through hole (4) in which the LEDs (3) are housed is closed by a cover (9).

7. The illuminating glazing unit as claimed in claim 6, **characterized in that** the cover (9) is an opaque cover.

8. The illuminating glazing unit as claimed in claim 6, **characterized in that** the cover (9) is made of a translucent or transparent material, and **in that** the glazing unit additionally contains LEDs (15) whose emitting faces (18) are turned toward the cover (9) instead of toward the internal edge (14).

9. The illuminating glazing unit as claimed in the preceding claim, **characterized in that** the cover (9) is a removable cover, fixed onto the first main face (11) of the first sheet (1) by reversible fixing means (10).

10. A vehicle having an illuminating glazing unit as claimed in any one of the preceding claims, **characterized in that** the first main face (11) of the first sheet (1) of the glazing unit is in contact with the inside of the vehicle.

11. The vehicle as claimed in the preceding claim, **characterized in that** it is a motor vehicle.

12. The vehicle as claimed in the preceding claim, **characterized in that** the illuminating glazing unit is part of the roof of the vehicle.
